# EUROPÄISCHE PATENTANMELDUNG

(11) **EP 0 060 475 A1**
(43) Veröffentlichungstag der Anmeldung: **22.09.1982**
(21) Anmeldenummer: 82101807.4
(22) Anmeldetag: 08.03.1982
(51) Int. Cl.: C07F 9/24, C07F 9/44, A01N 57/28

(54) **Phosphor(phosphon)-säureesteramide, ihre Herstellung und Verwendung**

(30) Priorität: 18.03.1981 DE 3110596
(71) Anmelder: BAYER AG, 51368 Leverkusen (DE)
(72) Erfinder: Arlt, Dieter, Prof. Dr., D-5000 Koeln 80 (DE); Homeyer, Bernhard, Dr., D-5090 Leverkusen 3 (DE); Hammann, Ingeborg, Dr., D-5000 Koeln 1 (DE)

(57) **Zusammenfassung**

Die Erfindung betrifft neue Phosphor(phosphon)-säure- esteramide der Formel 1 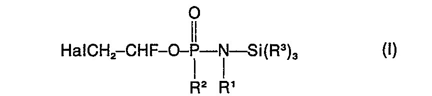 in welcher
R¹ für Wasserstoff oder gegebenenfalls substituiertes Alkyl,
R² für gegebenenfalls substituiertes Alkyl oder gegebenenfalls substituiertes Alkoxy,
R³ für gegebenenfalls substituiertes Alkyl und

Hal für Halogen stehen, weiche erhalten werden, wenn man Phosphor(phosphon)-säureesteramide der Formel 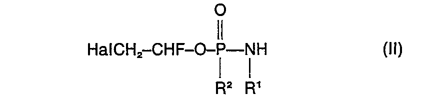 in welcher
R', R² und Hai die oben angegebene Bedeutung haben, mit Trialkyl-chlorsilanen der Formel III 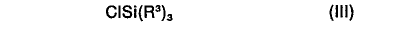 in weicher
R³ die oben angegebene Bedeutung besitzt, in Gegenwart eines Säureakzeptors und gegebenenfalls in Gegenwart eines Lösungsmittels umsetzt, und weiche als Schädlingsbekämpfungsmittel, insbesondere als Insektizide und Akarizide verwendet werden können.

## Beschreibung

Die Erfindung betrifft neue 0-(1-Fluor-2-halogen-ethyl)-phosphor(phosphon)-säure-esteramide, ein Verfahren zu ihrer Herstellung, sie enthaltende Schädlingsbekämpfungsmittel, ihre Herstellung und Verwendung als Schädlingsbekämpfungsmittel, welche insbesondere insektizide und nematizide Eigenschaften besitzen.

Es ist bereits aus der DE-Offenlegungsschrift 2 629 016 bekannt geworden, daß bestimmte Phosphor(phosphon)-säure- esteramide insektizide, akarizide und nematizide Eigenschaften besitzen. Diese Verbindungen sind jedoch unter bestimmten Anwendungsbedingungen nicht immer voll befriedigend.

Es wurden nun neue Phosphor(phosphon)-säureesteramide der Formel I 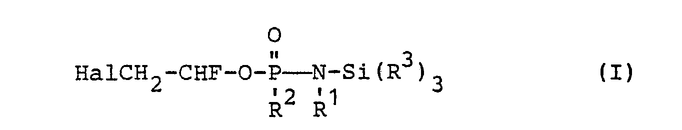 gefunden, in welcher
für Wasserstoff oder gegebenenfalls substituiertes Alkyl,
_{R}² für gegebenenfalls substituiertes Alkyl oder gegebenenfalls substituiertes Alkoxy,
_{R}³ für gegebenenfalls substituiertes Alkyl und

Hal für Halogen stehen.

Weiterhin wurde gefunden, daß die neuen Verbindungen der Formel I erhalten werden, wenn man

Phosphor(phosphon)-säureesteramide der Formel II 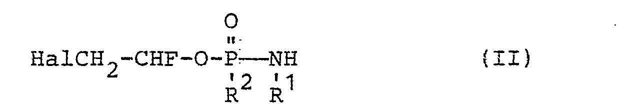 in welcher
R¹, R² und Hal die oben angegebene Bedeutung haben,
mit Trialkyl-chlorsilanen der Formel III 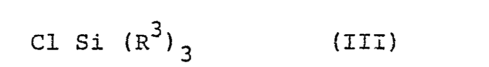 in welcher
_{R}³ die oben angegebene Bedeutung besitzt, in Gegenwart eines Säureakzeptors und gegebenenfalls in Gegewart eines Lösungsmittels umsetzt.

Die neuen Verbindungen der Formel I sind überraschenderweise gegenüber den bereits bekannten ensprechenden Verbindungen insbesondere durch eine geringe Warmblütertoxizität und besonders durch eine spezifische Wirksamkeit als systemisches Bodeninsektizid von hoher Wirkdauer ausgezeichnet. Außerdem besitzen die erfindungsgemäßen Verbindungen eine sehr gute Pflanzenverträglichkeit.

Im gegebenenfalls substituierten Alkyl _{R}¹, _{R}² und _{R}³ steht Alkyl für geradkettiges oder verzweigtes Alkyl mit vorzugsweise 1 bis 6, insbesondere 1 bis 4 Kohlenstoffatomen. Beispielhaft seien gegebenenfalls substituiertes Methyl, Ethyl, n- und i-Propyl, n-, i-, s- und t-Butyl, genannt.

Im gegebenenfalls substituierten Alkoxy R² steht Alkoxy für geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n- und i-Propoxy und n-, i-, s- und t-Butoxy genannt.

Die Alkylreste R¹, R² und R³ sowie der Alkoxyrest _{R}² können einen oder mehrere, vorzugsweise 1 bis 3, insbesondere 1 oder 2 gleiche oder verschiedene Substituenten tragen. Als Substituenten seien beispielhaft aufgeführt: Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogen, vorzugsweise Fluor, Chlor, Brom und Jod, insbesondere Chlor und Brom, sowie Cyano.

Als substituiertes Alkyl R³ und Alkoxy R² seien besonders durch Halogen substituiertes Alkyl (Halogenalkyl) und Alkoxy (Halogenalkoxy) erwähnt.

Als Halogen Hal steht vorzugsweise Fluor, Chlor, Brom und Jod, insbesondere Chlor und Brom.

Bevorzugt sind Verbindungen der Formel I, in welcher
_{R}¹ für Wasserstoff oder Alkyl
_{R}² für Alkyl, _{A}lkoxy oder Halogenalkoxy,
_{R}³ für Alkyl oder Halogenalkyl und
Hal für Chlor oder Brom stehen.

Besonders bevorzugt sind Verbindungen der Formel I, in welcher
_{R}¹ für Wasserstoff oder C₁₋₄-Alkyl,
_{R}² für C₁₋₄ Alkyl, C₁₋₄ Alkoxy oder C₁₋₄ Halogenalkoxy (mit vorzugsweise 1 bis 5, insbesondere 1 bis 3 Halogenatomen und vorzugsweise Fluor oder Chlor als Halogen),
R³ für C₁₋₄ Alkyl oder C₁₋₄ Halogenalkyl (mit vorzugsweise 1 bis 5, insbesondere 1 bis 3 Halogenatomen und vorzugsweise Fluor oder Chlor als Halogen) und

Hal für Chlor oder Brom stehen.
Ganz besonders bevorzugt sind Verbindungen der Formel I, in welcher
_{R}¹ für Wasserstoff, Methyl, Ethyl, i- und n-Propyl, 1-Chlorisopropyl und sec.-Butyl,
R² für C₁₋₄ Alkyl und C₁₋₄ Alko^{xy,}
R³ für C₁₋₄ Alkyl und
Hal für Chlor oder Brom stehen.

Verwendet man beispielsweise 0-[1-Fluor-2-brom-ethyl]-0-ethyl-phosphorsäure-diester-N-ethylamid und Trimethyl-monochlor-silan als Ausgangsverbindungen, so kann die Reaktion diese Verbindungen durch das folgende Formelschema skizziert werden:

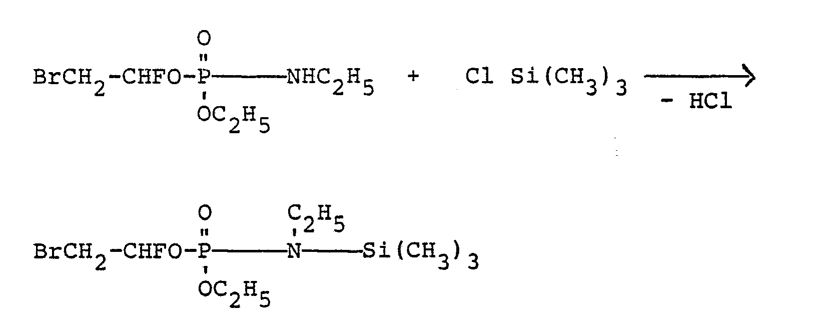

Die als Ausgangsstoffe dienenden 0-(1-Fluor-2-halogen- ethyl)-phosphor-(phosphon)-säureesteramide der Formel II sind bekannt bzw. in üblicher Weise nach bekannten Verfahren herstellbar.

Als Bespiele dieser Ausgangsstoffe seien genannt Methan-und Ethan-0-(1-fluor-2-chlor-ethyl)-phosphon-esteramid, Methan- und Ethan-O-(1-fluor-2-brom-ethyl)-phosphon- esteramid und deren N-alkylderivate mit 1 bis 4 Kohlenstoffatomen, weiterhin
0-(1-Fluor-2-chlor-ethyl)-O-methyl-phosphorsäure-diester- amid,
0-(1-Fluor-2-chlor-ethyl)-0-methyl-phosphorsäure-diester-N-ethyl-amid,
O-(1-Fluor-2-chlor-ethyl)-O-methyl-phosphorsäure-diester-N-methyl-amid,
0-(1-Fluor-2-chlor-ethyl)-0-methyl-phosphorsäure-diester-N-i-propyl-amid,
O-(1-Fluor-2-chlor-ethyl)-O-methyl-phosphorsäure-diester-N-n-propyl-amid,
0-(1-Fluor-2-chlor-ethyl)-O-methyl-phosphorsäure-diester-N-sec.-butyl-amid
O-(1-Fluor-2-chlor-ethyl)-O-ethyl-phosphorsäure-diester- amid,
O-(1-Fluor-2-chlor-ethyl)-O-ethyl-phosphorsäure-diester-N-ethyl-amid,
O-(1-Fluor-2-chlor-ethyl)-O-ethyl-phosphorsäure-diester-N-methyl-amid,
0-(1-Fluor-2-chlor-ethyl)-0-ethyl-phosphorsäure-diester-N-i-propyl-amid,
0-(1-Fluor-2-chlor-ethyl)-0-ethyl-phosphorsäure-diester-N-n-propyl-amid,
O-(1-Fluor-2-chlor-ethyl)-O-ethyl-phosphorsäure-diester-N-sec.-butyl-amid,
0-(1-Fluor-2-chlor-ethyl)-0-i-o.n-propyl-phosphorsäure- diester-amid,
0-(1-Fluor-2-chlor-ethyl)-0-i.o.n-propyl-phosphorsäure- diester-N-ethyl-amid,
O-(1-Fluor-2-chlorethyl)-O-i.o.n.-propyl-phosphorsäure- diester-N-methyl-amid,
0-(1-Fluor-2-chlor-ethyl)-0-i.o.n-propyl-phosphorsäure- diester-N-i-propyl-amid,
0-(1-Fluor-2-chlor-ethyl)-0-i.o.n-propyl-phosphorsäure- diester-N-n-propyl-amid,
0-(1-Fluor-2-chlor-ethyl)-0-i.o.n-propyl-phosphorsäure- diester-N-sec.-butyl-amid,
0-(1-Fluor-2-brom-ethyl)-0-methyl-phosphorsäure-diester- amid,
0-(1-Fluor-2-brom-ethyl)-O-methyl-phosphorsäure-diester-N-ethyl-amid,
0-(1-Fluor-2-brom-ethyl)-0-methyl-phosphorsäure-diester-N-methyl-amid,
O-(1-Fluor-2-brom-ethyl)-O-methyl-phosphorsäure-diester-N-i-propyl-amid,
0-(1-Fluor-2-brom-ethyl)-0-methyl-phosphorsäure-diester-N-n-propyl-amid,
O-(1-Fluor-2-brom-ethyl)-O-methyl-phosphorsäure-diester-N-sec.-butyl-amid,
0-(1-Fluor-2-brom-ethyl)-0-ethyl-phosphorsäure-diester-N-amid,
O-(1-Fluor-2-brom-ethyl)-O-ethyl-phosphorsäure-diester-N-ethyl-amid,
O-(1-Fluor-2-brom-ethyl)-O-ethyl-phosphorsäure-diester-N-methyl-amid,
O-(1-Fluor-2-brom-ethyl)-O-ethyl-phosphorsäure-diester-N-i-propyl-amid,
O-(1-Fluor-2-brom-ethyl)-O-ethyl-phosphorsäure-diester-N-n-propyl-amid,
O-(1-Fluor-2-brom-ethyl)-O-ethyl-phosphorsäure-diester-N-sec.-butyl-amid,
0-(1-Fluor-2-brom-ethyl)-0-ethyl-phosphorsäure-diester-N-chlor-isopropyl-amid.

Die Umsetzung der genannten Ausgangsstoffe der Formeln II und III zu den erfindungsgemäßen Verbindungen der Formel I wird bevorzugt unter Mitverwendung geeigneter Lösungs- und Verdünnungsmittel durchgeführt. Als solche kommen praktisch alle inerten organischen Solventien in Frage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol oder Ether, z.B. Diethyl- und Dibutylether, Dioxan, ferner Ketone, beispielsweise Aceton, Methylethyl-, Methylisopropyl- und Methylisobutylketon, außerdem Nitrile, wie Aceto- und Propionitril.

Als Säureakzeptoren können alle üblichen Säurebindemittel Verwendung finden. Besonders bewährt haben sich tertiäre Amine wie Trimethylamin, Triethylamin, Dimethylanilin, Dimethylbenzylamin und Pyridin, ferner Alkalicarbonate wie Natrium- und Kaliumcarbonat.

Die Reaktionstemperatur kann innerhalb eines größeren Bereichs variiert werden. Im allgemeinen arbeitet man zwischen 0 und 100°C, vorzugsweise bei 20 bis 40°C. Die Umsetzung läßt man im allgemeinen bei Normaldruck ablaufen.

Man setzt die Reaktionsteilnehmer vorzugsweise im äquimolaren Verhältnis ein. Ein Überschuß der einen oder anderen Komponente bringt keine wesentlichen Vorteile. Die Reaktion wird vorzugsweise in einem der angegebenen Lösungsmittel in Gegenwart eines Säureakzeptors durchgeführt. Die Aufarbeitung des Ansatzes erfolgt nach üblichen Methoden durch Filtration, Waschen des Filtrats und Abdestillieren des Lösungsmittels.

Die neuen Verbindungen werden in Form von ölen erhalten, die sich nicht unzersetzt destillieren lassen, jedoch durch sogenanntes "Andestillieren", d.h. längeres Erhitzen unter vermindertem Druck auf mäßig erhöhte Temperaturen von den letzten flüchtigen Anteilen befreit und auf diese Weise gereinigt werden können. Zu ihrer Charakterisierung kann der Brechungsindex dienen.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, Im Vorrats-und Materialschutz sowie auf dem Hygienesektor vorkommen. Sie sind gegen normal sensible und resistente Arten sowie gegen alle ocher einzelne Entwicklungsstadien wirksam. Zu den oben erwähnten Schädlingen gehören:

Aus der Ordnung der Isopoda z.B. Oniscus asellus, Armadillidium vulgare, Procellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Colloembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.,

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, _{D}oralis pomi, Eriosoma lanigerum, Hyalopterus arundinis, Macrosiphum avenae, Myzus spp., Phorodon humuli,

Rhopalosiphum padi, Empoasca spp., Euscelis bilobatus, _{Ne}pₕotₑttix cincticeps, Lecanium corni, Saissetia oleae, Laedelphax striatellus, Nilaparvata lugens, Aonidiella aurantii, Aspidiotus hederae, Pseudöcoccus spp. Psylla spp. Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleo.ptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp. Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp. Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetraychus spp.,

Zu den pflanzenparasitären Nematoden gehören Pratylenchus spp., Radopholus similis, Ditylenchus dipsaci,

Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln,
also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B.

Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-FettalkoholEther, z.B. Alkylarylpolyglykol-ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexartige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-% liegen. Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Wirksamkeit der erfindungsgemäßen Verbindungen soll anhand der folgenden Beispiele erläutert werden, wobei teilweise mit den aus der DE-Offenlegungsschrift 2.629.016 bekannten O-[1-Fluor-2-bromethyl]-O-ethyl-phosphorsäure-diester-N-ethylamid ("Vergleichsverbindung A") und O-[1-Fluor-2-chlorethy!7-0-ethyl-phosphorsäure-diester-N-methylamid ("Vergleichsverbindung B") verglichen wurde.

### Beispiel A

### Grenzkonzentrations-Test / Bodeninsekten

Testinsekt: Phorbia antiqua-Maden (im Boden) Lösungsmittel: 3 Gewichtsteile Aceton Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator _{'}zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden,welche in ppm ( = mg/l) angegeben wird. Man füllt den Boden in Töpfe und läßt diese bei Raumtemperatur stehen.

Nach 24 Stunden werden die Testtiere in den behandelten Boden gegeben und nach 2 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist O %, wenn noch genau so viele Testinsekten leben wie bei der unbehandelten Kontrolle.

In einem Test bei einer Wirkstoffkonzentration von 1,25 ppm zeigte die "Vergleichsverbindung A" keine Wirkung (0 %), während z.B. die Verbindung der Beispiele 1, 2, 3 und 4 einen Abtötungsgrad von 100 % ergaben.

### Beispiel B

### Grenzkonzentrations-Test / Nematoden

Testnematode: Meloidogyne incognita Lösungsmittel: 3 Gewichtsteile Aceton Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27^{o}C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist O %, wenn der Befall genau so hoch ist wie bei den Kontrollpflanzen in unbehandeltem, aber in gleicher Weise verseuchtem Boden.

In einem Test bei einer Konzentration von 5 ppm zeigten z.B. die Verbindungen der Beispiele 1, 2, 3, 4 und 5 einen Abtötungsgrad von 100 %.

### Beispiel _{C}

### Tetranychus-Test (resistent)

Lösungsmittel: 3 Gewichtsteile Aceton Emulgator: 1 Gewichtsteil _{A}lkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris),die stark von allen Entwicklungsstadien der gemeiren Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

In einem Test bei einer Konzentration von 0,1 % zeigte die "Vergleichsverbindung A" nach 2 Tagen einen Abtötungsgrad von 40 %, während beispielsweise die Verbindungen der Beispiele 1, 2 und 4 Abtötungsgrade zwischen 95 und 100 % ergaben.

### Beispiel D

### Drosophila-Test

Lösungsmittel: 3 Gewichtsteile Aceton Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 cm³ der Wirkstoffzubereirung wird auf eine Filterpapierscheibe (7 cm Durchmesser) aufpipettiert. Man legt diese naß auf die öffnung eines Glasgefäßes, in dem sich 50 Taufliegen (Drosophila melanogaster) befinden und bedeckt es mit einer Glasplatte.

Nach der gewünschten Zeit bestimmt man die Abtötung in %. Dabei bedeutet 100 %, daß alle Fliegen abgetötet wurden; 0 % bedeutet, daß keine Fliegen abgetötet wurden.

In diesem Test zeigten bei Konzentrationen von 0,001 % nach 1 Tag die Vergleichsverbindungen A und B keine Wirkung (O während beispielsweise die Verbindungen der Beispiele 1;2 und 3 einen Abtötungsgrad von 100 % und die Verbindung des Beispiels 4 einen Abötungsgrad von 95 % ergaben.

Die Herstellung der erfindungsgemäßen Verbindungen soll anhand der folgenden Beispiele erläutert werden (Me bedeutet CH₃)^{:}

### Beispiel 1

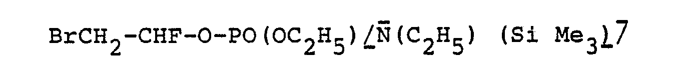

In 150 ml Toluol werden 27,8 g (0,1 m) 0-[1-Fluor-2-brom-ethyl]-O-ethyl-phosphorsäure-diester-N-ethyl-amid und 13,0 g Trimethyl-monochlor-silan (0,12 m) gelöst. Bei 20 - 25°C werden 12,0 g (0,12 m) Trethylamin zugetropft. Das Reaktionsgemisch wird 5 Stunden gerührt und anschließend zweimal mit je 250 ml Wasser im Schütteltrichter extrahiert. Die organische Phase wird mit Natriumsulfat getrocknet und das Lösungsmittel im Vakuum verdampft. Man erhält 32,5 g rohes 0-[1-Fluor-2-brom-ethyl]-O-ethylphosphorsäure-diester-N-ethyl-N-trimethylsilyl-amid als hellbraunes öl, 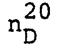 : 1,4514.

### Beispiel 2

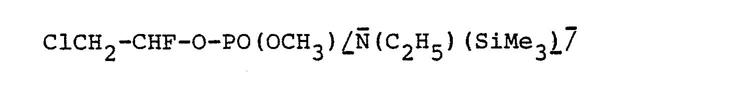

21,0 g (0,1 m) O-[1-Fluor-2-chlor-ethyl]-O-methyl-phosphorsäure-diester-N-ethyl-amid und 13,0 g (0,12 m) Trimethyl-monochlorsilan werden in 150 ml Methylenchlorid gelöst. Bei 10-20°C werden unter Rühren 12,0 g (0,12 m) Triethylamin zugetropft. Nach 6 Stunden wird das Reaktionsgemisch mit 500 ml Wasser verrührt. Die Phasen werden getrennt, darauffolgend wird die Methylenchloridlösung des gebildeten Wirkstoffes mit Natriumsulfat getrocknet und im Vakuum eingeengt. Es verbleiben 27 g rohes O-[1-Fluor-2-chlor-ethyl]-O-methyl-phosphorsäure- diester-N-ethyl-N-trimethylsilylamid, ein farbiges öl, 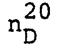 : 1,4451.

### Beispiel 3 - 6

In analoger Weise wie in Beispiel 1 oder 2 beschrieben wurden folgende Verbindungen synthetisiert und durch ihren Brechungsindex charakterisiert:

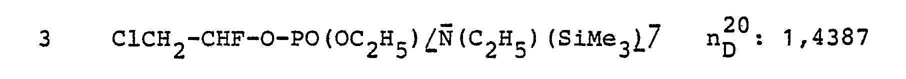

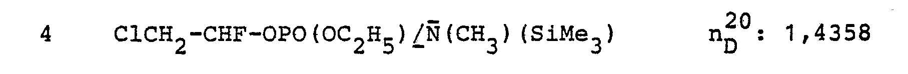

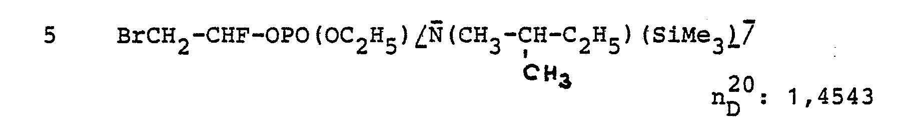

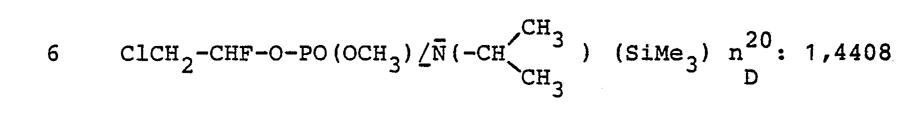

## Patentansprüche

1. Phosphor(phosphon)-säureesteramide der Formel I 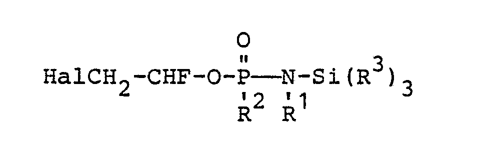 in welcher
_{R}¹ für Wasserstoff oder gegebenenfalls substituiertes Alkyl,
_{R}² für gegebenenfalls substituiertes Alkyl oder gegebenenfalls substituiertes Alkoxy,
_{R}³ für gegebenenfalls substituiertes Alkyl und
Hal für Halogen stehen.

2. Phosphor(phosphon)-säureesteramide der Formel I gemäß Anspruch 1, in welcher
R¹ für Wasserstoff oder Alkyl
_{R}² für Alkyl, Alkoxy oder Halogenalkoxy,
_{R}³ für Alkyl oder Halogenalkyl und
Hal für Chlor oder Brom stehen.

3. Phosphor(phosphon)-säureesteramide der Formel I gemäß Anspruch 1, in welcher
_{R}¹ für Wasserstoff oder C₁₋₄-Alkyl,
R² für C₁₋₄-Alkyl, C₁₋₄-Alkoxy oder C₁₋₄-Halogenalkoxy (mit vorzugsweise 1 bis 5, insbesondere 1 bis 3 Halogenatomen und vorzugsweise Fluor oder Chlor als Halogen),
R³ für C₁₋₄-Alkyl oder C₁₋₄-Halogenalkyl (mit vorzugsweise 1 bis 5, insbesondere 1 bis 3 Halogenatomen und vorzugsweise Fluor oder Chlor als Halogen) und
Hal für Chlor oder Brom stehen.

4. Phosphor(phosphon)-säureesteramide der Formel I gemäß Anspruch 1, in welcher
_{R}¹ für Wasserstoff, Methyl, Ethyl, i- und n-Propyl, 1-Chlorisopropyl- und sec.-Butyl,
^{R2} für C₁₋₄-Alkyl und C₁₋₄-Alkoxy,
Hal für Chlor oder Brom stehen.

5. Verfahren zur Herstellung von Phosphor(phosphon)-säureesteramiden der Formel I 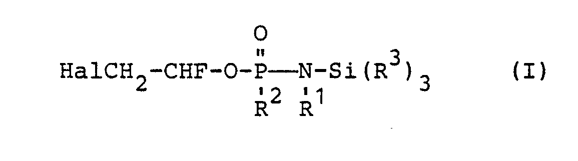 in welcher
R¹ für Wasserstoff oder gegebenenfalls substituiertes Alkyl,
_{R}² für gegebenenfalls substituiertes Alkyl oder gegebenenfalls substituiertes Alkoxy,
_{R}³ für gegebenenfalls substituiertes Alkyl und
Hal für Halogen stehen,
dadurch gekennzeichnet, daß man Phosphor(phosphon)-säureesteramide der Formel II 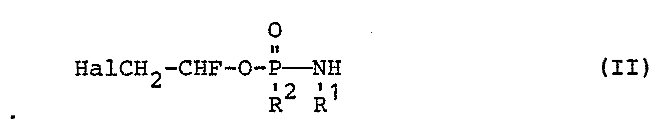 in welcher
_{R}¹, _{R}² und Hal die oben angegebene Bedeutung haben,
mit Trialkyl-chlorsilanen der Formel III 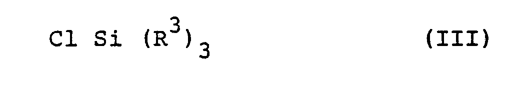 in welcher
_{R}³ die oben angegebene Bedeutung besitzt, in Gegenwart eines Säureakzeptors und gegebenenfalls in Gegenwart eines Lösungsmittels umsetzt.

6. Schädlingsbekämpfungsmittel, gekennzeichnet, durch einen Gehalt an mindestens einen Phosphor(phosphon)-säureesteramid der Formel I.

7. Verwendung von Phosphor(phosphon)-säureesteramid der Formel I zur Bekämpfung von Schädlingen, insbesondere Insekten, Spinnentieren und Nematoden.

8. Verfahren zur Bekämpfung von Schädlingen, dadurch gekennzeichnet, daß man Phosphor(phosphon)-säure- esteramide der Formel I auf Schädlinge, vorzugsweise Insekten, Spinnentiere oder Nematoden oder ihren Lebensraum einwirken läßt.

9. Verfahren zur Herstellung von Schädlingsbekämpfungsmitteln, dadurch gekennzeichnet, daß man Phosphor-(phosphon)-säureesteramide der Formel I mit Streckmitteln und/oder oberflächenaktiven Mitteln vermischt.
